Europäisches Patentamt

European Patent Office

Office européen des brevets

(19)

(11) Veröffentlichungsnummer: **0 192 913**
B1

(12) # EUROPÄISCHE PATENTSCHRIFT

(45) Veröffentlichungstag der Patentschrift:
26.07.89

(51) Int. Cl.⁴: **F 16 B 13/06**

(21) Anmeldenummer: 85810582.8

(22) Anmeldetag: 09.12.85

(54) **Spreizdübel mit Setzanzeige.**

(30) Priorität: 28.02.85 DE 3507022

(43) Veröffentlichungstag der Anmeldung:
03.09.86 Patentblatt 86/36

(45) Bekanntmachung des Hinweises auf die Patenterteilung:
26.07.89 Patentblatt 89/30

(84) Benannte Vertragsstaaten:
AT CH DE FR GB LI

(56) Entgegenhaltungen:
EP-A- 0 099 028
CH-A- 583 379
DE-A- 2 536 137
DE-A- 3 310 001
DE-B- 2 458 317

(73) Patentinhaber: HILTI Aktiengesellschaft,
FL-9494 Schaan (LI)

(72) Erfinder: Herb, Armin, Lärchenstrasse 9,
D-8123 Peissenberg (DE)

(74) Vertreter: Wildi, Roland, Hilti Aktiengesellschaft
Patentabteilung, FL-9494 Schaan (LI)

EP 0 192 913 B1

## Beschreibung

Die Erfindung betrifft einen Spreizdübel mit zylindrischer, vom vorderen, setzrichtungsseitigen Ende her wenigstens teilweise längsgeschlitzter einstückiger Spreizhülse und einem mittels eines Gewindebolzens in das vordere Ende der Spreizhülse einziehbaren, sich zu seinem vorderen Ende hin im Querschnitt erweiternden Spreizkörper zum radialen Aufweiten der Spreizhülse, wobei der Gewindebolzen an seinem rückwärtigen Endbereich eine am rückwärtigen Ende der Spreizhülse anliegende Lastbefestigungsschulter und die Spreizhülse eine axial verformbare Stauchzone aufweist und auf der Spreizhülse eine beim Einsetzen des Dübels in ein Aufnahmematerial gegenüber dem zu befestigenden Bauteil als axialer Anschlag dienende Scheibe angeordnet ist.

Spreizdübel der genannten Art werden hauptsächlich im mittleren und oberen Lastbereich, beispielsweise zum Festspannen eines Bauteiles gegen einen Untergrund, verwendet. Dabei ist es von Vorteil oder kann in gewissen Anwendungsfällen sogar unerlässlich sein, das für eine ausreichende Verankerung geforderte Anzugsdrehmoment durch eine optisch kontrollierbare Einrichtung sichtbar zu machen.

Bei einem bekannten Spreizdübel (DE-A-25 36 137) sind zwischen dem rückwärtigen Ende der Spreizhülse und der Lastbefestigungsschulter ein axial verformbares Element sowie eine Distanzhülse angeordnet. Eine die Distanzhülse umgebende Hülse ist mit einer Scheibe verbunden. Die Scheibe wird durch einen Bund sowie teilweise herausgestanzte Lappen auf der Hülse gehalten. Bei Überschreiten einer bestimmten Verformungskraft werden die Lappen umgebogen, so dass die Lastbefestigungsschulter unter Verformung der Lappen sowie des zwischen der Spreizhülse und der Distanzhülse angeordneten Elementes sich der Scheibe nähern kann. Dieser Dübel erfordert jedoch eine sehr aufwendige, mehrteilige Herstellung. Der Verformungswiderstand der die Scheibe haltenden Lappen läßt sich außerdem nicht genau definieren.

Bei einem weiteren bekannten Spreizdübel (EP-A1-0 099 028) weist die Spreizhülse in ihrem rückwärtigen Bereich eine axial verformbare Stauchzone auf. Die beim Einsetzen des Dübels in ein Aufnahmematerial gegenüber dem zu befestigenden Bauteil als axialer Anschlag dienende Scheibe ist zwischen dem rückwärtigen Ende der Spreizhülse und dem als Lastbefestigungsschulter dienenden Kopf des Schraubenbolzens angeordnet. Die Scheibe ist also axial nicht verschiebbar und kann somit auch nicht als Setzanzeige dienen.

Ein weiterer bekannter Spreizdübel (DE-A1-33 10 001) weist zwei von beiden Enden her in eine Spreizhülse einziehbare Spreizkonen auf. Um das Einziehen des rückwärtigen Spreizkonus in die Spreizhülse sicherzustellen, ist auf einer sich am rückwärtigen Spreizkonus abstützenden Distanzhülse eine Scheibe angeordnet. Die Scheibe wird durch eine verformbare, gewölbte Scheibe, unter der Tintenkapseln zur Setzanzeige vorgesehen sind, in axialem Abstand von dem als Lastbefestigungsschulter dienenden Kopf des Gewindebolzens gehalten. Bei diesem Spreizdübel wird ein wesentlicher Teil des durch die Verformung der gewölbten Scheibe möglichen Nachlaufweges bereits beim Spreizvorgang des Dübels aufgebraucht. Der verbleibende Rest des Nachlaufweges dient dann dem axialen Stauchen eines zwischen dem Spreizkonus und der Distanzhülse angeordneten, verformbaren Rohrabschnittes. Von aussen ist nicht erkennbar, ob der Nachlaufweg durch Einziehen des Spreizkonus oder durch Stauchen des Rohrabschnittes aufgebraucht wurde.

Der Erfindung liegt die Aufgabe zugrunde, einen einfach herstell- und anwendbaren Spreizdübel zu schaffen, der eine eindeutige optische Anzeige des Spreizzustandes ermöglicht.

Gemäß der Erfindung wird dies dadurch erreicht, dass die Scheibe in axialem Abstand vom rückwärtigen Ende der Spreizhülse angeordnet ist und zur axialen Festlegung der Scheibe an der Spreizhülse nach Übersteigen eines Mindestverankerungswertes überwindbare, als Verformungsbereiche ausgebildete Anschlagmittel in Form von Noppen vorgesehen sind.

Das Anordnen von Anschlagmitteln direkt an der Spreizhülse ermöglicht eine sehr einfache, wirtschaftliche Herstellung des Spreizdübels. Durch das Überwinden der Anschlagmittel bzw. das axiale Verschieben der Lastbefestigungsschulter gegenüber der Scheibe bei gleichzeitiger Verformung der Stauchzone wird angezeigt, dass der Spreizdübel im Aufnahmematerial einen Mindestverankerungswert erreicht hat. Um ein nachträgliches Lösen des zu befestigenden Bauteiles zu vermeiden, wird an den Angriffsmitteln des Gewindebolzens vorzugsweise solange ein Drehmoment aufgebracht, bis die Scheibe an der Lastbefestigungsschulter zur Anlage kommt. Dabei bzw. danach können auch allfällige Hohllagen zwischen dem Aufnahmematerial und dem zu befestigenden Bauteil überbrückt werden.

Gemäß der Erfindung ist vorgesehen, die Verformungsbereiche als Noppen auszubilden. Noppen können beispielsweise bei einer aus Blech hergestellten Spreizhülse vor dem Rollvorgang auf einfache Weise in den Blechzuschnitt eingeprägt werden. Durch die Anzahl und Grösse der Noppen ist eine Anpassung des Verschiebewiderstandes der Scheibe an den jeweiligen Dübeltyp bzw. an dessen Anwendung möglich.

Bei ungünstiger Lage des Spreizdübels ist das Verschieben der Lastbefestigungsschulter gegen die Scheibe nicht ohne weiteres erkennbar. Dies gilt insbesondere bei Muttern, die beidseitig angefaßt sind. Um die Erkennbarkeit der Anzeige zu verbessern, ist es daher vorteilhaft, auf der Spreizhülse eine weitere, an der Lastbefestigungsschulter anliegende Distanzscheibe anzuordnen. Eine soche Distanzscheibe weist vorzugsweise denselben Durchmesser auf wie die zu Beginn des Spreizvorganges in axialem Abstand davon angeordnete Scheibe. Die Distanzscheibe kann gegebenenfalls auch zwischen dem rückwärtigen Ende der Spreizhülse und der Lastbefestigungsschulter angeordnet werden. Der Setzvorgang ist dann beendet, wenn beide Scheiben ohne Zwischenraum aneinanderliegen.

Die Erfindung soll nachstehend anhand der sie beispielsweise wiedergebenden Zeichnungen näher erläutert werden. Es zeigen:

Fig. 1 einen erfindungsgemässen Spreizdübel, in ungespreiztem Zustand;

Fig. 2 den Spreizdübel gemäss Fig. 1 nach dem teilweisen Einziehen des Spreizkörpers, im Längsschnitt;

Fig. 3 den Spreizdübel gemäss Fig. 1 und 2, in fertig verankertem Zustand.

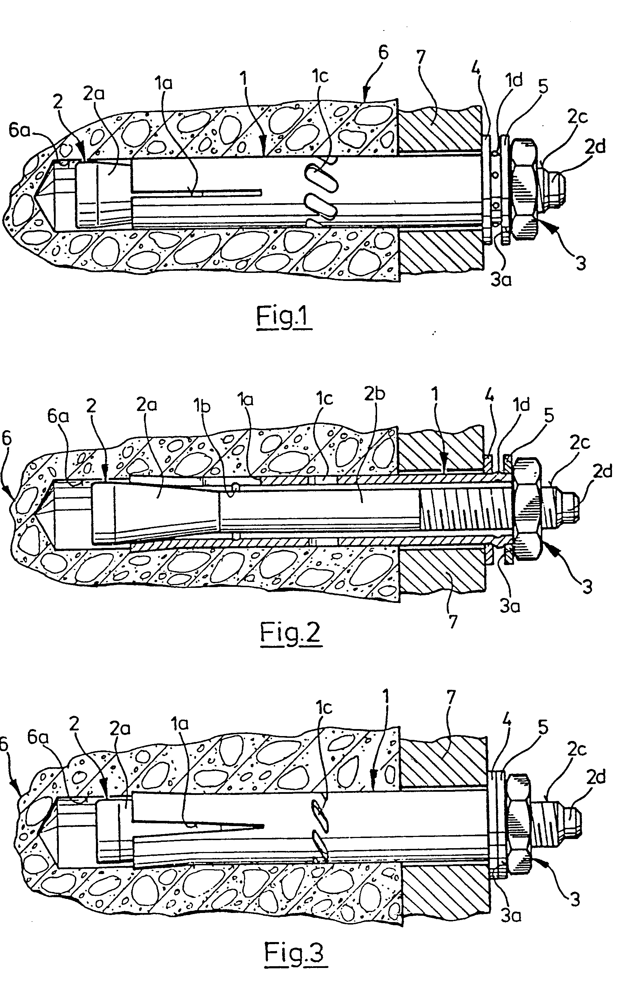

Der aus den Fig. 1 bis 3 ersichtliche Spreizdübel besteht im wesentlichen aus einer insgesamt mit 1 bezeichneten Spreizhülse und einem die Spreizhülse 1 axial durchsetzenden, insgesamt mit 2 bezeichneten Gewindebolzen. Die Spreizhülse 1 weist vom vorderen Ende ausgehende, sich etwa über einen Drittel der Länge der Spreizhülse 1 erstreckende Längsschlitze 1 a auf. Auf ihrer Innenseite ist die Spreizhülse 1 außerdem mit einer das radiale Aufweiten des längsgeschlitzten Spreizbereiches erleichternden Ringnut 1 b versehen. Der mittlere Bereich der Spreizhülse 1 ist als axial verformbare Stauchzone 1 c ausgebildet. Die Stauchzone 1 c besteht aus Durchbrüchen, zwischen denen gegenüber der Dübellängsachse geneigte Stege verbleiben. Der rückwärtige Endbereich der Spreizhülse 1 ist mit Noppen 1 d versehen. Der vordere Endbereich des Gewindebolzens 2 ist als sich zum vorderen Ende im Querschnitt erweiternder Spreizkörper 2 a ausgebildet. Der an den Spreizkörper 2 a anschließende zylindrische Schaft 2 b ist in seinem rückwärtigen Bereich mit einem Gewinde 2 c sowie einem beim Eintreiben des Dübels Beschädigungen des Gewindes 2 c verhindernden Ansatz 2 d versehen. Auf das Gewinde 2 c des Gewindebolzens ist eine insgesamt mit 3 bezeichnete Mutter aufgeschraubt. Die Mutter 3 bildet auf der der Spreizhülse 1 zugewandten Seite eine Lastbefestigungsschulter 3 a. Eine Scheibe 4 ist auf die Spreizhülse 1 aufgeschoben und wird durch die Noppen 1 d in axialem Abstand von der Lastbefestigungsschulter 3 a gehalten. Auf der Spreizhülse 1 ist außerdem eine an der Lastbefestigungsschulter 3 a anliegende Distanzscheibe 5 angeordnet.

In den Fig. 1 bis 3 ist der Spreizdübel in ein Bohrloch 6 a eines insgesamt mit 6 bezeichneten Aufnahmematerials eingesetzt und dient der Befestigung eines Bauteils 7. Fig. 1 zeigt den durch das Bauteil 7 hindurch in das Bohrloch 6 a des Aufnahmematerials 6 eingeführten Spreizdübel, wobei die Scheibe 4 an der Oberfläche des Bauteils 7 anliegt. Die Scheibe 4 dient somit als axialer Anschlag beim Einführen des Dübels. Ein Verschieben der Scheibe 4 wird durch die Noppen 1 d verhindert. Die Stauchzone 1 c befindet sich dabei noch in unverformtem Zustand. Da dem Einführen der Spreizhülse 1 je nach Durchmesser und Zustand des Bohrloches 6 a ein mehr oder weniger großer Widerstand entgegengesetzt wird, ist der Gewindebolzen 2 an seinem rückwärtigen Ende mit dem Ansatz 2 d versehen, der bei allfälligen Hammerschlägen auf den Gewindebolzen 2 Beschädigungen des Gewindes 2 c verhindert. Nach dem Einsetzen des Dübels wird an der Mutter 3 ein Drehmoment aufgebracht, durch welches der Spreizkörper 2 a mittels des Gewindebolzens 2 unter radialer Aufweitung der Spreizhülse 1 in das vordere Ende der Spreizhülse 1 eingezogen wird. Die Längsschlitze 1 a sowie die Ringnut 1 b erleichtern diese radiale Aufweitung und Verspreizung der Spreizhülse 1 im Bohrloch 6 a. Die Stauchzone 1 c ist so dimensioniert, daß sie erst nach Erreichen eines Mindestverankerungswertes verformt wird. Wie aus Fig. 2 ersichtlich ist, befinden sich die Scheibe 4 und Distanzscheibe 5 in gespreiztem Zustand des Dübels noch immer in axialem Abstand voneinander.

Bei einem weiteren Ansteigen des an der Mutter 3 aufgebrachten Drehmomentes wird die Stauchzone 1 c axial verformt. Um dies zu ermöglichen, muß jedoch auch die durch die Noppen 1 d gebildete Festlegung der Scheibe 4 zerstört werden. Dies erfolgt durch das Verschieben der Scheibe 4 selbst. Das Erreichen des Mindestverankerungswertes ist somit von außen durch das Sichnähern der Distanzscheibe 5 an die Scheibe 4 optisch erkennbar. Der Endverankerungszustand ist dann erreicht, wenn die Distanzscheibe 5 an der Scheibe 4 anliegt, d. h. wenn der zu Beginn des Spreizvorganges zwischen den beiden Teilen bestehende Spalt aufgehoben ist. Dieser Zustand ist aus Fig. 3 ersichtlich. Die Figur 3 zeigt ferner die Verformung der Stauchzone 1 c. Erforderlichenfalls kann durch weiteres Aufbringen eines Drehmomentes an der Mutter 3 die Befestigung des Bauteiles 7 am Aufnahmematerial 6 vorgespannt bzw. eine allfällig vorhandene Hohllage zwischen dem Aufnahmematerial 6 und dem Bauteil 7 aufgehoben werden.

**Patentansprüche**

1. Spreizdübel mit zylindrischer, vom vorderen, setzrichtungsseitigen Ende her wenigstens teilweise längsgeschlitzter einstückiger Spreizhülse (1) und einem mittels eines Gewindebolzens (2) in das vordere Ende der Spreizhülse (1) einziehbaren, sich zu seinem vorderen Ende hin im Querschnitt erweiternden Spreizkörper (2a) zum radialen Aufweiten der Spreizhülse (1), wobei der Gewindebolzen (2) an seinem rückwärtigen Endbereich eine am rückwärtigen Ende der Spreizhülse (1) anliegende Lastbefestigungsschulter (3) und die Spreizhülse (1) eine axial verformbare Stauchzone (1c) aufweist und auf der Spreizhülse (1) eine beim Einsetzen des Dübels in eine Aufnahmematerial (6) gegenüber dem zu befestigenden Bauteil (7) als axialer Anschlag dienende Scheibe (4) angeordnet ist, dadurch gekennzeichnet, daß die Scheibe (4) in axialem Abstand vom rückwärtigen Ende der Spreizhülse (1) angeordnet ist und zur axialen Festlegung der Scheibe (4) an der Spreizhülse (1) nach Übersteigen eines Mindestverankerungswertes überwindbare, als Verformungsbereiche ausgebildete Anschlagmittel in Form von Noppen (1d) vorgesehen sind.

2. Dübel nach Anspruch 1, dadurch gekennzeichnet, daß auf der Spreizhülse (1) eine an der Lastbefestigungsschulter (3a) anliegende Distanz-Scheibe (5) angeordnet ist.

## Claims

1. An expansible dowel comprising a cylindrical onepiece expansible sleeve (1) which is at least partially longitudinally slotted from the setting-direction-side front end and an expansion body (2a), which can be drawn by means of a threaded bolt (2) into the front end of the expansible sleeve (1) and which widens in cross-section towards its front end, for the radial expansion of the expansible sleeve (1), in which respect the threaded bolt (2) has, on its rearward end, a load fastening shoulder (3) butting against the rearward end of the expansible sleeve (1) and the expansible sleeve (1) has an axially deformable compression zone (1c) and arranged on the expansible sleeve (1) is a washer (4) which, when the dowel is inserted into a reception material (6), serves as an axial stop relative to the structural part that is to be fastened, characterised in that the washer (4) is arranged at an axial spacing from the rearward end of the expansible sleeve (1) and provided for the axial securing of the washer (4) on the expansible sleeve (1) are stop means in the form of knobs (1d) which can be overcome after a minimum anchorage value has been exceeded and which are designed as deformation regions.

2. A dowel according to claim 1, characterised in that a distance washer (5) which butts against the load fastening shoulder (3a) is arranged on the expansible sleeve (1).

## Revendications

1. Cheville à expansion avec une douille expansible (1) en une seule pièce cylindrique, fendue du moins en partie dans le sens longitudinal à partir de l'extrémité antérieure dans le sens de l'enfoncement, et avec un corps d'expansion (2a) pour l'élargissement radial de la douille expansible (1) lequel peut être tiré, au moyen d'un boulon fileté (2), dans l'extrémité antérieure de la douille expansibel (1) et dont la section s'élargit en direction de son extrémité antérieure, le boulon fileté (2) présentant à sa section terminale postérieure un épaulement d'application de charge (3) en contact avec l'extrémité postérieure de la douille expansible (1), la douille expansible (1) comprenant une zone d'écrasement déformable axialement (1c) et une rondelle (4) placée sur la douille d'expansion (1) et servant de butée axiale par rapport à l'élément de construction (7) à fixer lors de l'introduction de la cheville dans une matériau de réception (6), caractérisé en ce que la rondelle (4) est disposée à distance axiale de l'extrémité postérieure de la douille expansible (1) et que des moyens de butée sous la forme de nopes (1d) franchissables et conformés en zones de déformation sont prévus pour le blocage axial de la rondelle (4) sur la douille expansible (1) après le dépassement d'une valeur d'ancrage minimale.

2. Cheville selon la revendication 1, caractérisée en ce qu'une rondelle d'écartement (5) appliquée contre l'épaulement d'application de la charge (3a) est disposée sur la douille expansible (1).

Fig.1

Fig.2

Fig.3